**Europäisches Patentamt**

(19) **European Patent Office**

**Office européen des brevets**

(11) Publication number: **0 289 282**
**A2**

# EUROPEAN PATENT APPLICATION

(12)

(21) Application number: **88303788.9**

(22) Date of filing: **27.04.88**

(51) Int. Cl.⁴: **G 09 G 1/00**
**G 06 F 15/20**

(30) Priority: **30.04.87 JP 107790/87**

(43) Date of publication of application:
**02.11.88 Bulletin 88/44**

(84) Designated Contracting States: **DE GB**

(71) Applicant: **SHARP KABUSHIKI KAISHA**
**22-22 Nagaike-cho Abeno-ku**
**Osaka 545 (JP)**

(72) Inventor: **Taguchi, Yasuhiro**
**1-57-301, Tsurumaihigashi-machi**
**Nara-shi Nara-ken (JP)**

**Sakae, Ayumi**
**Haitsuyama 202-goshitsu 4-58-1, Shinmatsudo**
**Matsudo-shi Chiba-ken (JP)**

(74) Representative: **Hitchcock, Esmond Antony et al**
**Lloyd Wise, Tregear & Co. Norman House 105-109 Strand**
**London WC2R 0AE (GB)**

(54) **Character processing device.**

(57) A character processing device is comprised of a keyboard, a text memory, a display, layout display means for displaying a reduced layout image of text data in a layout display range of the display means in accordance with a designated reduction ratio, comparator means for comparing the respective maximum lengths in the line and column directions of text data stored in the text memory means with the respective lengths in the line and column directions of the text input range of the display means, divider means for dividing the respective lengths in the line and column directions of the layout display range of the display means into the respective maximum lengths in the line and column directions of text data when the respective maximum lengths in the line and column directions of the text data are judged by the comparator means to be greater than the respective lengths in the line and column directions of the text input range, and reduction ratio designating means for designating respective reduction ratios in the line and column directions for displaying a reduced text layout image in the layout display means, the reduction ratios being established by processing respective quotients in the line and column directions obtained by means of the divider means in a predetermined manner.

EP 0 289 282 A2

**Description**

## CHARACTER PROCESSING DEVICE

This invention relates to a character processing device and more particularly relates to a character processing device with a function capable of displaying on its display the layout of any one page of a text that has been input in correspondence with the page format of the final.

Generally, a character processing device of this type is equipped with a function capable of displaying on its display the layout image of any one page of a text which has been inputted through an input device or stored in a memory and displayed on the display, utilizing a display mode change effected by the operator. Such a layout image is displayed in a reduced state with a predetermined reduction ratio, irrespective of the actual dimension of the text displayed.

The Japanese published examined patent application No. 33587/87 (corresponding to U.S. Patent Application Ser. No. 221671 filed on 30th December, 1980) discloses a character processing device which is capable of displaying on a CRT screen an entire page of a text which is reduced in size, in proportion to the actual dimension of the text page.

However, a fixed reduction ratio is sometimes attended by the inconvenience that the layout image display is too small to allow the viewer to grasp the form of the image without difficulty. This is especially true with a text having relatively small dimensions.

In the disclosed prior art mentioned above, a complicated display control is involved since it is necessary to set the attribute data antecedent to character information in order to input the reduced page display mode.

In view of the foregoing, it is an object of this invention to provide a character processing device which is capable of consistently displaying a reduced layout image of a text with a proper reduction ratio in accordance with the dimension of the text concerned.

The present invention provides a character processing device which comprises

input means for inputting character data and various instructions,

text memory means for storing text data composed of character data inputted through the input means,

display means for displaying text data stored in the text memory means in a text input range,

layout display means for displaying a reduced layout image of text data in a layout display range of the display means in accordance with a designated reduction ratio,

comparator means for comparing the respective maximum lengths in the line and column directions of text data stored in the text memory means with the respective lengths in the line and column directions of the text input range of the display means,

divider means for dividing the respective lengths in the line and column directions of the layout display range of the display means into the respective maximum lengths in the line and column directions of text data when the respective maximum lengths in the line and column directions of the text data are judged by the comparator means to be greater than the respective lengths in the line and column directions of the text input range, and

reduction ratio designating means for designating respective reduction ratios in the line and column directions for displaying a reduced text layout image in the layout display means, the reduction ratios being established by processing respective quotients in the line and column directions obtained by means of the divider means in a predetermined manner.

The text input range of the display means in accordance with this invention may be composed of a text preparation range for displaying text data inputted through the input means and the layout display range.

Further, the reduction ratio designating means may be equipped with a comparator means for comparing the respective quotients in the line and column directions obtained by means of the divider means and establishes the reduction ratios by processing only the small one of two quotients in a predetermined manner, unless they are equal to each other, thus effecting constant correction of any slight visual discrepancy between the reduced layout image display and the actual text layout.

An embodiment of the invention will now be described by way of example and with reference to the accompanying drawings wherein:

Fig. 1 is a block diagram showing the functional configuration of a character processing device in accordance with the present invention;

Fig. 2 is a block diagram showing an embodiment of the present invention;

Fig. 3a and Fig. 3b are flowcharts illustrating the operation of the embodiment of the invention;

Fig. 4 is a view illustrating the relation between the text preparation range and the layout display range in the text input range in the embodiment of the invention; and

Fig. 5 is a view illustrating the dimension of a text stored in the memory of the embodiment of the invention.

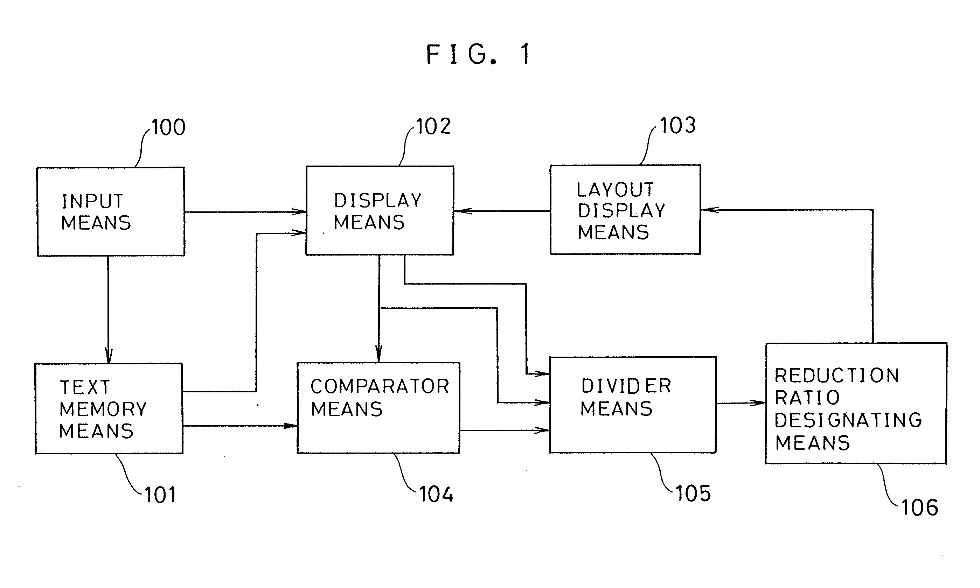

As shown in Fig. 1, a character processing device in accordance with the present invention is equipped with:

an input means 100 for inputting character data and various instructions,

a text memory means 101 for storing text data composed of character data inputted through the input means 100,

a display means 102 for displaying text data stored in the text memory means 101 in a text input range,

a layout display means 103 for displaying a reduced layout image of text data in a layout display range of the display means 102 in accordance with a designated reduction ratio,

a comparator means 104 for comparing the respective maximum lengths in the line and column directions of text data stored in the text memory means 101 with the respective lengths in the line and column directions of the text input range of the display means 102,

a divider means 105 for dividing the respective lengths in the line and column directions of the layout display range of the display means 102 into the respective maximum lengths in the line and column directions of text data when the respective maximum lengths in the line and column directions of the text data are judged by the comparator means 104 to be greater than the respective lengths in the line and column directions of the text input range, and

a reduction ratio designating means 106 for designating respective reduction ratios in the line and column directions for displaying a reduced text layout image in the layout display means 103, the reduction ratios being established by processing respective quotients in the line and column directions obtained by means of the divider means 105 in a predetermined manner.

In the above described construction, text data composed of character data inputted by the operator through the input means 100 is stored in the text memory means 101 and displayed on the display means 102. The layout display means 103 causes a reduced layout image of the text data to be displayed on the display means 102 in accordance with a reduction ratio designated by the reduction ratio designating means 106. Such a reduction ratio is to be obtained in the following manner; when it is judged by the comparator means 104 that the respective maximum lengths in the line and column directions of the text data have exceeded the respective lengths in the line and column directions of the text input range of the display means 102, the divider means 105 divides the respective maximum lengths in the line and column directions of the text data by the respective lengths in the line and column directions of a text data layout display range which is defiend in a part of the text input range of the display means 102. The quotients obtained are processed in a predetermined manner by the reduction ratio designating means 106, and thereby the reduction ratios are established.

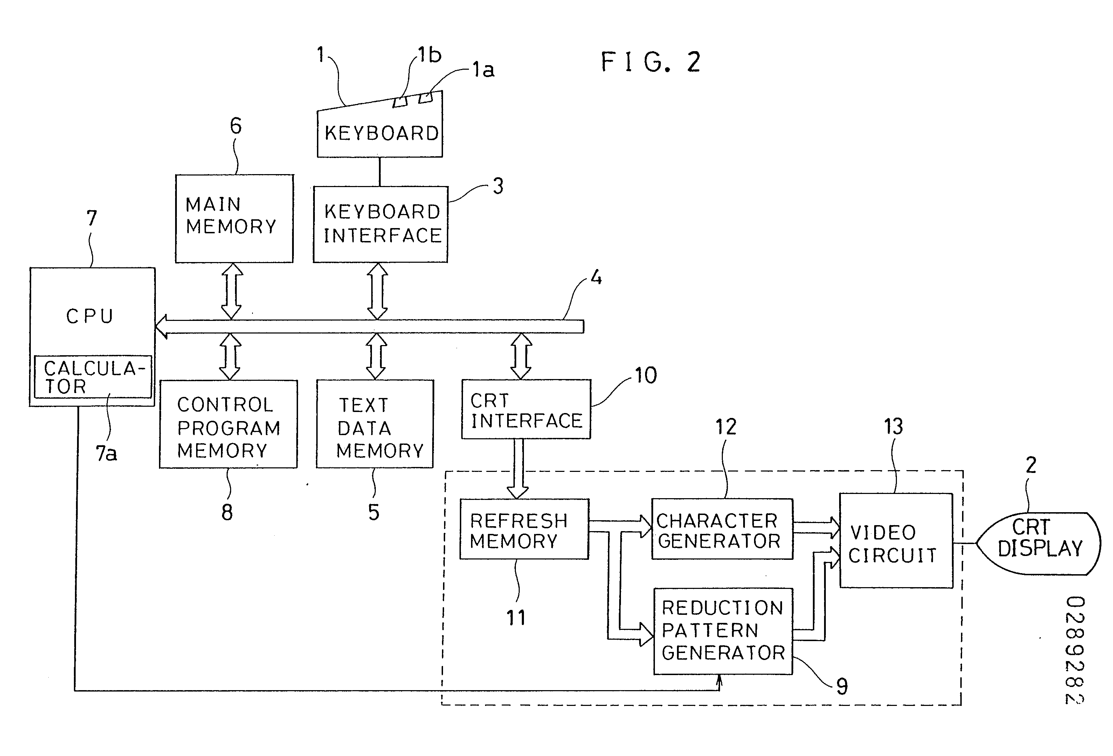

An explanation will now be given of an embodiment of the character processing device of the present invention with reference to Figs. 2 through 5.

A keyboard 1 in Fig. 2 is equipped with a plurality of keys including numerals keys, character keys, function keys, and so on. As the function keys, it includes a display change key la for changing a normal text preparation display on the screen of a CRT (Cathode Ray Tube) display 2 into a layout image display and a reduction ratio designating key 1b for designating a layout image display reduction ratio. When the operator depresses character keys on the keyboard 1, for example, the keyboard 1 outputs key signals, which are transmitted through a keyboard interface 3 and system bus 4 to be sequentially stored in a text data memory 5 which serves as the text memory means, as code signals corresponding to those character keys. The keyboard 1 and the keyboard interface 3 form the input means. In a main memory 6 are stored text dimension data inputted by the operator when preparing a text as well as other data necessary for text preparation.

A CPU (Central Processing Unit) 7 serves to control the entire system or edit text data inputted in accordance with the control program stored in a control program memory 8. Within the CPU 7 is provided a calculator 7a which serves as the divider means. When a layout image display command is inputted through the keyboard 1, the keyboard interface 3 and the system bus 4, the calculator 7a works out the proper reduction ratio, which is to be discussed later, based upon the text size information stored in the main memory 6. The reduction ratio thus obtained is transmitted to a reduction pattern generator 9.

A CRT interface 10 connects the system bus 4 to the display means which is composed of the reduction pattern generator 9, a refresh memory 11, a character generator 12, a video circuit 13, and a CRT display 2. Data to be displayed, for example, text data stored in the text data memory 5, is stored in the refresh memory 11 through the CRT interface 10, and the data thus stored is supplied to the character generator 12 to be established as a character pattern. The data is also supplied to the reduction pattern generator 9, and when a reduction ratio has been inputted in the reduction pattern generator 9 from the CPU 7, the data is established as a reduction pattern. The output signals from the character generator 12 and the reduction pattern generator 9 are inputted to the video circuit 13. As a result, ordinary characters and a layout image display are displayed on the CRT display 2 at the same time.

In the above configuration, the text data memory 5, the main memory 6 and the refresh memory 11 may be formed as random access memories, and the control program memory 8 may be formed as a read only memory. Further, instead of the CRT display 2, a display device well known in the art such as a dot matrix liquid crystal display with 640 by 480 pixels may be employed.

Though not shown in this embodiment, other memories well known in the art, for example, an external memory with a floppy disk as a storage medium for storing a great amount of text data, and what is called a directory for storing words that are frequently used, may be provided. Further, a printer for printing stored texts or an interface for transmitting text data to an external printer may be provided. Further, an image reader for entering graphic forms or illustrations may be provided as the input means.

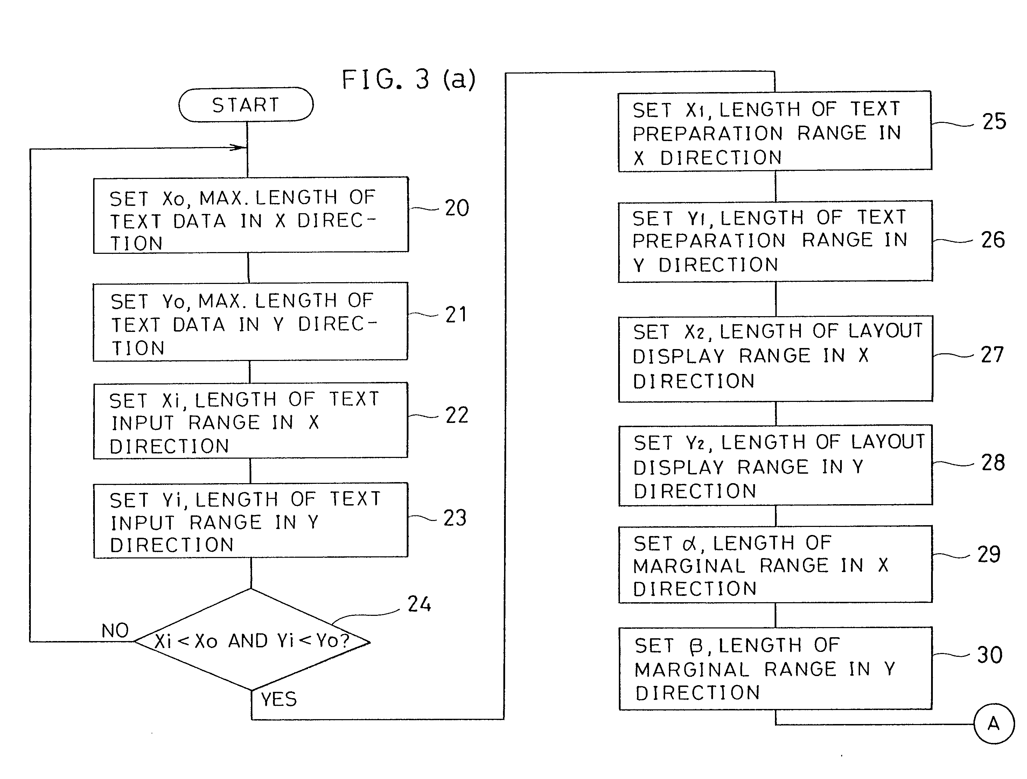

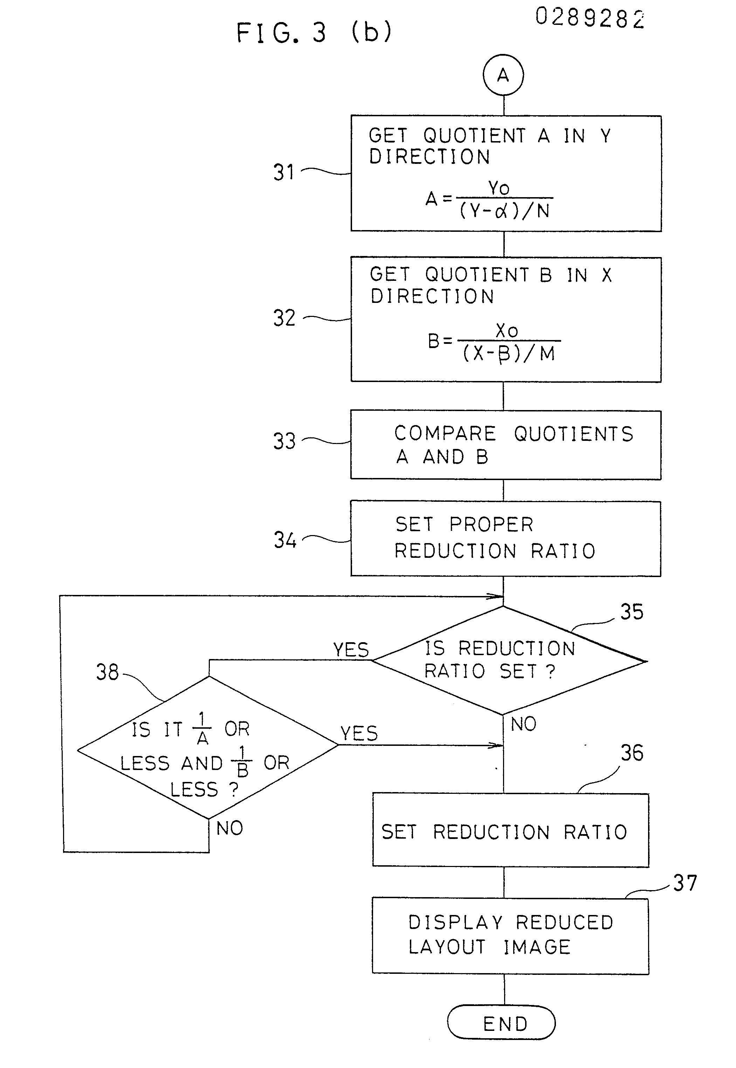

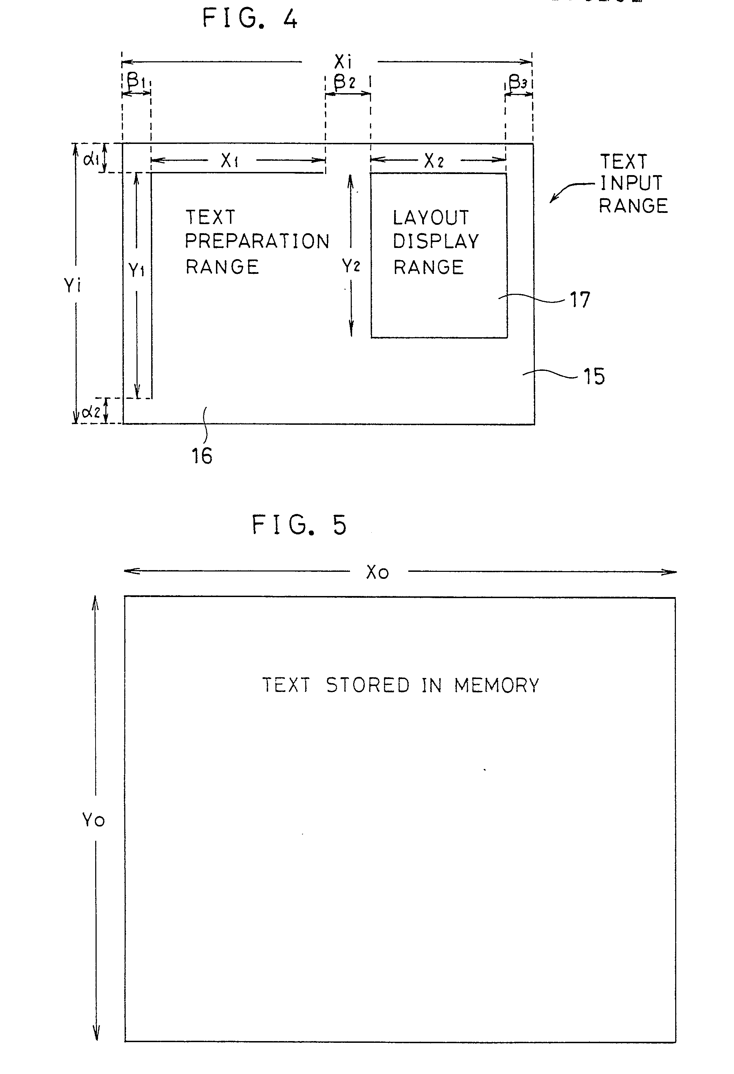

Explanation will now be given of the reduced layout image display operations which characterize this embodiment with reference to the flowcharts shown in Figs. 3a and 3b. Fig. 4 shows a text preparation range 16 and a layout display range 17 in a text input range 15, and Fig. 5 shows the text dimension corresponding to the text input range 15.

·The display of a reduced layout image is effected after the data processing by the CPU 7 when the display change key 1a on the keyboard 1 is depressed by the operator.

First, the calculator 7a calculates the maximum length $X_0$ in the line direction (hereinafter referred to as the X direction) of the text data stored in the text memory 5 based upon the text dimension information stored in the main memory 6 and sets the value thereof (Step 20). Similarly, the maximum length $Y_0$ in the column direction (hereinafter referred to as the Y direction) of the text data is calculated and the value thereof set (Step 21). Then, the length $X_i$ in the X direction of the text input range 15 which substantially corresponds to the dimension of the display on the CRT display 2 is set (Step 22). In a similar fashion, the length $Y_i$ in the Y direction of the text input range 15 is set (Step 23). Here judgement is made as to whether the respective maximum lengths $X_0$ and $Y_0$ in the X and Y directions of the text data stored in the text data memory 5 exceed the respective lengths $X_i$ and $Y_i$ in the X and Y directions of the text input range 15 or not (Step 24), and only when they do, does the operation go on to the next step. If not, it returns to Step 20. When the result of Step 24 is affirmative, the length $X_1$ in the X direction of the text preparation range 16 which serves as the character display range is calculated and the value thereof set (Step 25). Similarly, the length $Y_1$ in the Y direction of the text preparation range 16 is calculated and the value thereof set (Step 26). Then, the length $X_2$ in the X direction of the layout display range 17 is set (Step 27) and, similarly, the length $Y_2$ in the Y direction of the layout display range 17 is set (Step 28), whereupon, the length $\alpha$ ($= \alpha_1 + \alpha_2$) in the X direction of the marginal range in the X direction is calculated and the value thereof set (Step 29).

In a similar fashion, the length $\beta$ ($= \beta_1 + \beta_2 + \beta_3$) in the Y direction of the marginal range in the Y direction is calculated and the value thereof set (Step 30).

The marginal range can be calculated in the X direction by subtracting the length $X_1$ in the X direction of the text preparation range 16 and the length $X_2$ in the X direction of the layout display range 17 from the length $X_i$ in the X direction of the text input range 15. In the Y direction, it can be calculated by subtracting the length $Y_1$ in the Y direction of the text preparation range 16 from the length $Y_i$ in the Y direction of the text input range 15. It should be noted here that $\alpha \geqq 0$ and $\beta \geqq 0$.

When the above setting has been completed, the reduction ratio calculation in the X and Y directions for displaying a reduced layout image of the entire text that has been prepared is performed. The quotient A in the Y direction can be obtained from the equation below (Step 31):

$$A = \frac{Y_0}{(Y_i - \alpha)/N}$$

Here, N denotes the layout display reduction ratio in the Y direction which has been preset for the text input range 15.

The quotient B in the X direction is obtained from the equation below (Step 32):

$$B = \frac{X_0}{(X_i - \beta)/M}$$

Here, M denotes the layout display reduction ratio in the X direction which has been present for the text input range 15. The quotients A and B in the Y and X directions that are respectively obtained in this way are used with the figures which is omitted figures below the decimal point.

After the quotients in the X and Y directions have been calculated in accordance with the above procedure, the proper reduction ratio is determined. This is performed in order to correct any slight visual discrepancy between the layout of the printed page and the reduced layout image display which is attributable to the difference in value between the quotient B in the X direction and the quotient A in the Y direction obtained in accordance with the above procedure. The correction is effected in the following fashion: the quotient A in the Y direction and the quotient B in the X direction are compared with each other (Step 33), and any difference between the quotients A and B is removed by adopting the smaller one of the two. For example, when the quotient A in the Y direction is greater than the quotient B in the X direction, only the quotient B in the X direction is adopted for both the X and Y directions, and vice versa. When the quotient A is equal to the quotient B, no such correction is effected. Then a division is performed by the calculator 7b, with the quotient thus obtained as the devisor and 1 as the divided in order to establish the proper reduction ratio (Step 34). Here the operator depresses the reduction ratio designating key1b on the keyboard 1 to see if the desired value has been attained or not (Step 35). When there is no setting (designation) of the reduction ratio effected on the part of the operator, the proper reduction ratio established in Step 35 is set in the reduction pattern generator 9 (Step 36) and the corresponding reduced layout image is displayed in the layout display range 17 (Step 37). When it is judged in Step 35 that a reduction ratio setting has been effected by the operator, it is decided whether the value in the X direction of that reduction ratio is no greater than 1/B and whether that in the Y direction is no greater that 1/A (Step 38), and if these conditions are satisfied, Steps 36 and 37 are executed and the layout image is displayed with the reduction ratio set by the operator. If the above conditions are not satisfied, a reduction ratio setting is awaited in Step 35.

As will be appreciated from the foregoing, the character processing system of the present invention makes it possible to set the reduction ratio for a layout image display automatically in accordance with the dimension of the text input range and that of the text prepared, thereby enabling the layout of the text prepared to be checked in a very precise fashion.

**Claims**

1. A character processing device comprising:
input means for inputting character data and various instructions,
text memory means for storing text data composed of character data inputted through the input means,
display means for displaying text data stored in the text memory means in a text input range,
layout display means for displaying a reduced layout image of text data in a layout display range of the display means in accordance with a designated reduction ratio,
comparator means for comparing the respective maximum lengths in the line and column directions of text data stored in the text memory means with the respective lengths in the line and column directions of the text input range of the display means,
divider means for dividing the respective lengths in the line and column directions of the layout display range of the display means into the respective maximum lengths in the line and column directions of text data when the respective maximum lengths in the line and column directions of the text data are judged by the comparator means to be greater than the respective lengths in the line and column directions of the text input range, and
reduction ratio designating means for designating respective reduction ratios in the line and column direc tions for displaying a reduced text layout image in the layout display means, the reduction ratios being established by processing respective quotients in the line and column directions obtained by means of the divider means in a predetermined manner.

2. A device defined in claim 1 wherein the text input range of the display means is composed of a text preparation range for displaying text data inputted through the input means and the layout display range.

3. A device defined in claim 1 wherein the reduction ratio designating means is provided with a comparator means for comparing the respective quotients in the line and column directions obtained by means of the divider means and establishes the reduction ratios by processing only the small one of two quotients in a predetermined manner, unless they are equal to each other.

4. A device defined in claim. 1 wherein the input means consists of a keyboard provided with a plurality of character input keys and control keys.

5. A device defined in claim 1 wherein the text memory means is formed as a random access memory unit.

6. A device defined in claim 1 wherein the display means consists of a CRT display.

# FIG. 1

INPUT MEANS — 100

DISPLAY MEANS — 102

LAYOUT DISPLAY MEANS — 103

TEXT MEMORY MEANS — 101

COMPARATOR MEANS — 104

DIVIDER MEANS — 105

REDUCTION RATIO DESIGNATING MEANS — 106

FIG. 2

Block diagram showing: KEYBOARD (1), with keys 1b and 1a; KEYBOARD INTERFACE (3); MAIN MEMORY (6); CPU (7) containing CALCULATOR (7a); bus (4); CONTROL PROGRAM MEMORY (8); TEXT DATA MEMORY (5); CRT INTERFACE (10); REFRESH MEMORY (11); CHARACTER GENERATOR (12); REDUCTION PATTERN GENERATOR (9); VIDEO CIRCUIT (13); CRT DISPLAY (2).

## FIG. 3 (a)

```
          START
            │
            ▼
┌──────────────────────────┐
│ SET Xo, MAX. LENGTH OF   │──── 20
│ TEXT DATA IN X DIREC-    │
│ TION                     │
└──────────────────────────┘
            │
            ▼
┌──────────────────────────┐
│ SET Yo, MAX. LENGTH OF   │──── 21
│ TEXT DATA IN Y DIREC-    │
│ TION                     │
└──────────────────────────┘
            │
            ▼
┌──────────────────────────┐
│ SET Xi, LENGTH OF TEXT   │──── 22
│ INPUT RANGE IN X         │
│ DIRECTION                │
└──────────────────────────┘
            │
            ▼
┌──────────────────────────┐
│ SET Yi, LENGTH OF TEXT   │──── 23
│ INPUT RANGE IN Y         │
│ DIRECTION                │
└──────────────────────────┘
            │
            ▼
NO      ◇ Xi < Xo AND Yi < Yo? ◇──── 24
            │ YES
```

```
┌──────────────────────────┐
│ SET X1, LENGTH OF TEXT   │──── 25
│ PREPARATION RANGE IN     │
│ X DIRECTION              │
└──────────────────────────┘
            │
            ▼
┌──────────────────────────┐
│ SET Y1, LENGTH OF TEXT   │──── 26
│ PREPARATION RANGE IN     │
│ Y DIRECTION              │
└──────────────────────────┘
            │
            ▼
┌──────────────────────────┐
│ SET X2, LENGTH OF LAYOUT │──── 27
│ DISPLAY RANGE IN X       │
│ DIRECTION                │
└──────────────────────────┘
            │
            ▼
┌──────────────────────────┐
│ SET Y2, LENGTH OF LAYOUT │──── 28
│ DISPLAY RANGE IN Y       │
│ DIRECTION                │
└──────────────────────────┘
            │
            ▼
┌──────────────────────────┐
│ SET α, LENGTH OF         │──── 29
│ MARGINAL RANGE IN X      │
│ DIRECTION                │
└──────────────────────────┘
            │
            ▼
┌──────────────────────────┐
│ SET β, LENGTH OF         │──── 30
│ MARGINAL RANGE IN Y      │
│ DIRECTION                │
└──────────────────────────┘
            │
            ▼
           (A)
```

0289282

FIG. 3 (b)

A

31 — GET QUOTIENT A IN Y DIRECTION

$$A = \frac{Y_o}{(Y-\alpha)/N}$$

32 — GET QUOTIENT B IN X DIRECTION

$$B = \frac{X_o}{(X-\beta)/M}$$

33 — COMPARE QUOTIENTS A AND B

34 — SET PROPER REDUCTION RATIO

35 — IS REDUCTION RATIO SET ?

38 — IS IT $\frac{1}{A}$ OR LESS AND $\frac{1}{B}$ OR LESS ?

YES

YES

NO

NO

NO

36 — SET REDUCTION RATIO

37 — DISPLAY REDUCED LAYOUT IMAGE

END

0289282

## FIG. 4

TEXT INPUT RANGE

TEXT PREPARATION RANGE

LAYOUT DISPLAY RANGE

17

15

16

## FIG. 5

TEXT STORED IN MEMORY